# DEMANDE DE BREVET EUROPEEN

(11) **EP 0 840 214 A1**
(43) Date de publication de la demande: **06.05.1998**
(21) Numéro de dépôt: 97402016.6
(22) Date de dépôt: 28.08.1997
(51) Int. Cl.: G06F 9/44

(54) **Outil d'intégration d'applications pour plate-forme informatique**

(30) Priorité: 31.10.1996 FR 9613302
(71) Demandeur: BULL S.A., 78434 Louveciennes (FR)
(72) Inventeur: Sitbon, Gérard, 94400 Vitry (FR); Baillif, Christian, 92340 Bourg La Reine (FR); Nachef, armand, 78180 Montigny Le Bretonneux (FR)
(74) Mandataire: Gouesmel, Daniel

(57) **Abrégé**

Outil (INTO) d'intégration d'applications (APC) pour plate-forme (PL) informatique constituée d'un réseau de machines sur lesquelles tournent une pluralité de services (SERV) spécifiques de la plate-forme, caractérisé en ce qu'il comprend :
- des moyens de saisie (MSIG) des informations d'intégration de la nouvelle application pour lui permettre d'être prise en compte par tout ou partie des services,
- des moyens de conversion (MCONV) des informations d'intégration en un ensemble (SCRi) de commandes d'intégration de l'application (APC) dans les services (SERV).

applicable aux plates-formes informatiques.

## Description

La présente invention concerne un outil d'intégration d'applications pour une plate-forme informatique constituée d'un réseau de machines sur lesquelles tournent une pluralité d'applications hétérogènes.

### LE DOMAINE TECHNIQUE

Dans la pratique courante, les plates - formes sont des systèmes qui, le plus souvent, sont "orientés vers la production" (en anglais "production oriented systems"). A ce titre, elles ont la même fonction que les grandes unités de traitement (en anglais, "mainframes") traditionnelles des grands constructeurs informatiques. Cela signifie qu'elles doivent exercer un haut niveau de contrôle sur les requêtes de services que demande le client-utilisateur (en anglais "customer service requests").

### LE PROBLEME POSE

Généralement, une telle plate-forme est livrée au client qui l'a commandée, munies de logiciels intégrés dans l'usine de montage de son constructeur. Une partie de ceux-ci est constituée par des applications de services dont le but est d'améliorer l'administration, la sécurité, la disponibilité, l'automatisation et la production de la plate-forme.

Par commodité de langage, dans la suite du texte on désignera une «application de services» sous l'appellation de -services-.

Cependant, à tout moment, le client peut avoir besoin d'intégrer une nouvelle application de telle manière qu'elle soit prise en compte par ces services, dans le temps le plus réduit possible.

L'intégration de l'application a lieu après la phase de son développement. Elle doit se faire **sans toucher au code source de tous les programmes compilés de la plate-forme.**

On rappelle qu'une application est un ensemble d'objets, qui peuvent être des :
programmes, transactions, librairies,
scripts (scénarii de commandes pour l'homme de métier),
fichiers et données de description,
fichiers de configurations,
rapport d'impression,
fichiers journaux, etc.

Pour prendre en compte l'application à intégrer, chaque service offert par la plate-forme doit assurer l'interface avec des objets de cette application **sans les modifier**. Par exemple, si l'application fournit des fichiers journaux, on peut l'administrer en surveillant ces fichiers.

Généralement, une plate-forme comprend des dizaines de services. Chacun de ceux-ci possède son propre mécanisme d'intégration de toute application à installer. En général, il possède une interface graphique qui lui est propre et qui lui permet d'intégrer l'application installée. De telles interfaces graphiques sont par exemple décrites dans les demandes de brevet Français No. 95 01236, 95 08851 et 96 08161 déposées par la société demanderesse respectivement sous le titre «outil de génération et d'exécution de commandes à interface graphique», «architecture d'habillage d'applications pour une plate-forme informatique», et «lanceur d'applications sécurisé à interface graphique». En comptant le temps d'apprentissage nécessaire aux opérateurs humains pour effectuer l'intégration, celle-ci demande au moins une demi-journée (parfois plusieurs jours) par service, c'est à dire au moins une semaine pour une dizaine de services. A noter aussi, qu'une fois l'application intégrée dans un service, il faut ensuite apprendre à utiliser celle-ci : l'intégration et l'utilisation sont deux processus disjoints et indépendants. Donc l'intégration d'une nouvelle application reste une opération coûteuse.

De plus, avec la technique actuelle, le risque d'erreur dans une intégration est grand car celle-ci s'effectue le plus souvent chez les clients d'une manière trop rapide. De plus, avec cette méthode, le déploiement de chaque application à intégrer est long et difficile car il faut répéter les mêmes opérations sur chaque site (lieu géographique où se situe une machine appartenant à la plate-forme).

### L'OBJET DE L'INVENTION

La présente invention permet de remédier aux inconvénients mentionnés ci-dessus en créant au niveau de la plate-forme une structure d'accueil pour applications, permettant aux éditeurs d'applications et aux clients ayant au moins une application à intégrer, de configurer les services de la plate-forme pour que la dite application soit prise en compte par ces derniers dès son installation. En d'autres termes, l'outil selon l'invention, d'une part permet à toute application à intégrer, de tirer profit automatiquement des services offerts par la plate-forme dès son installation et, d'autre part facilite le déploiement des applications sur une multitude de sites.

Selon l'invention, l'outil d'intégration d'applications pour plate-forme informatique constituée d'un réseau de machines sur lesquelles tournent une pluralité de services spécifiques de la plate-forme, est caractérisé en ce qu'il comprend : - des moyens de saisie des informations d'intégration de la nouvelle application pour lui permettre d'être prise en compte par tout ou partie des services, - des moyens de conversion des informations d'intégration en un ensemble de commandes d'intégration de l'application dans les services.

Dans une forme de réalisation préférée de l'invention, les moyens de saisie sont constitués par l'association de moyens d'acquisition des informations caractéristiques de l'application à intégrer et d'une interface graphique de collecte de ces informations et de transmission de celles-ci aux moyens de conversion.

De préférence, les moyens de conversion sont constitués par un logiciel qui produit, à partir des informations caractéristiques, des scripts propres à chaque service, qui permettent l'intégration automatique de l'application dans les services.

D'autres caractéristiques et avantages de la présente invention apparaîtront dans la description suivante donnée à titre d'exemple non limitatif et en se référant aux dessins annexés. Sur ces dessins :

La figure 1 illustre schématiquement le problème que doit résoudre l'invention.

La figure 2 montre schématiquement comment une application du client est intégrée au sein des différents domaines d'intégration.

La figure 3 composée des figures 3a et 3b, montre les éléments caractéristiques de l'outil d'intégration selon l'invention et la façon dont ils opèrent.

La figure 4 composée des figures 4a et 4b illustre le tableau de bord de l'interface graphique (visualisation de l'écran de cette interface) appartenant aux moyens de saisie des informations d'intégration de l'application appartenant à l'outil d'intégration selon l'invention, pour un ensemble de services particulier.

### DESCRIPTION DES GRANDES LIGNES DE L'INVENTION

### I) LES ELEMENTS CARACTERISTIQUES ESSENTIELS:

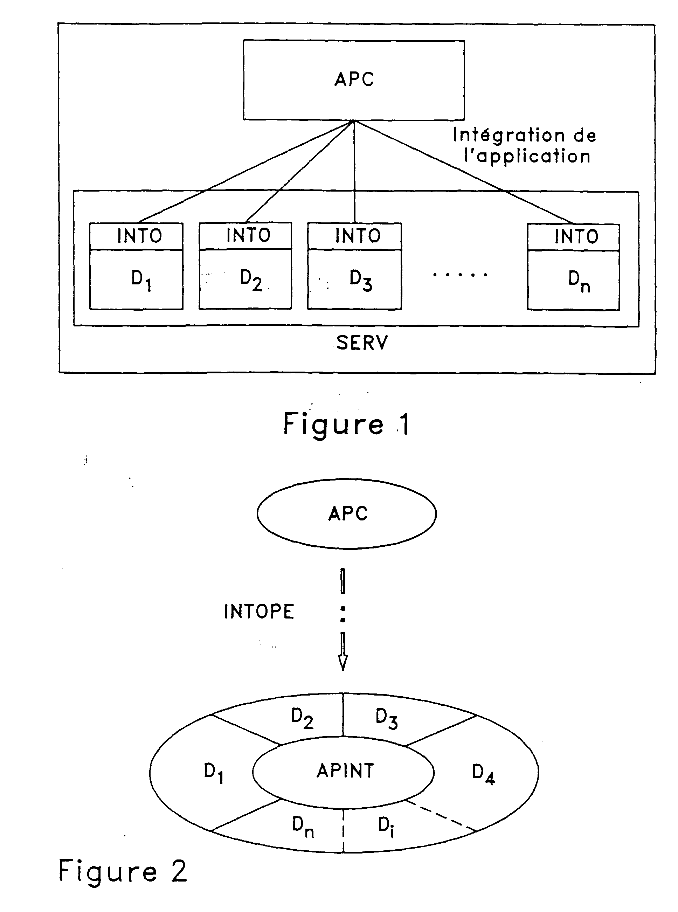

On considère les figures 1 et 2.

A la figure 1, on a représenté une plate-forme PL vendue par son constructeur à un client C. Celle-ci est livrée à ce dernier munie d'un certain nombre de services intégrés SERV. Ces derniers sont divisés en une pluralité de domaines d'activités D1 à Dn, par exemple au nombre de six soit D1 à D6, dont on trouve le détail dans la demande No. 96 08161 précitée.

On suppose que le client C a étudié une application APC et terminé la phase de son développement. Il veut donc l'intégrer dans PL.

Pour ce faire, il utilise l'outil d'intégration d'applications selon l'invention INTO qui permet, ainsi qu'on peut le voir sur la figure 1, de configurer les services SERV de manière à prendre en compte APC. Pour cela, INTO la munit de valeurs rajoutées dans l'un des domaines d'intégration D1, D2, D3, ... ,D6 de la plate-forme.

Chacun de ces six domaines comprend par exemple un certain nombre de caractéristiques qui sont rappelées à l'intérieur du tableau ci-dessous :

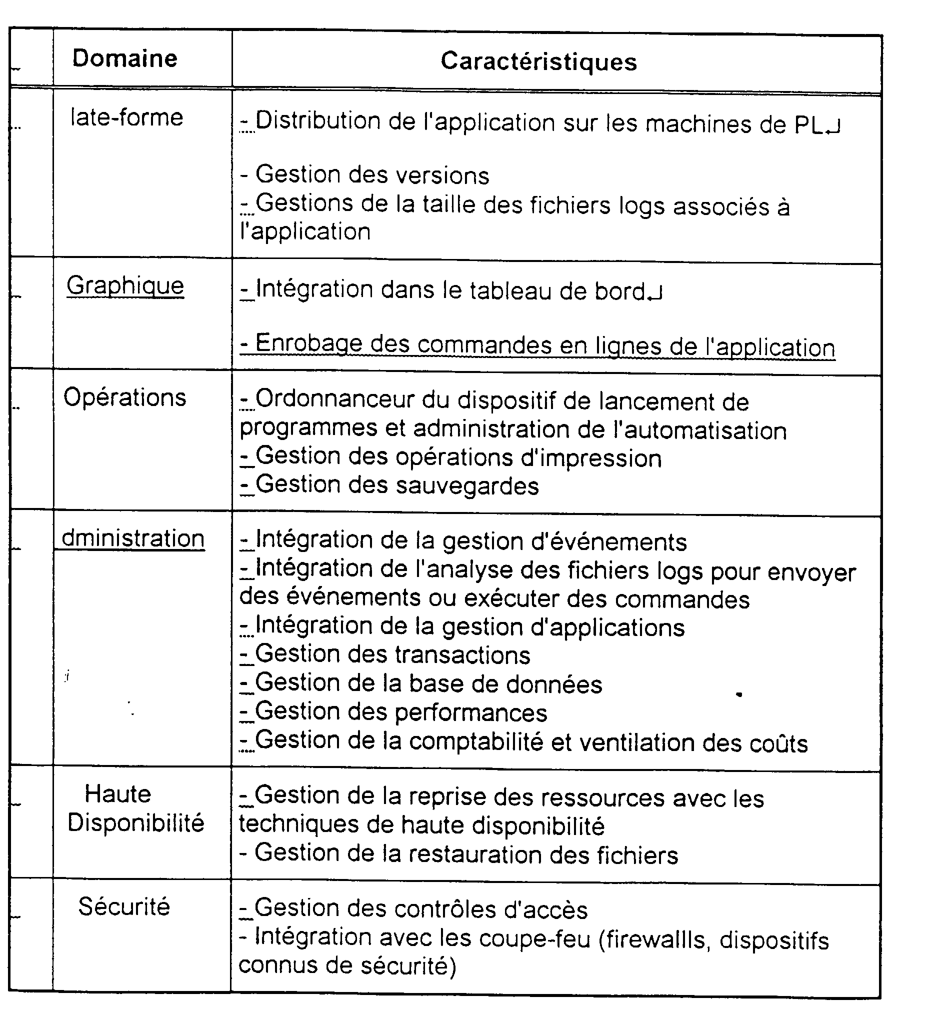

Pour intégrer APC dans PL, l'outil INTO effectue un certain nombre d'opérations d'intégration INTOPE.

A la figure 2, on a symbolisé cette intégration en montrant APC représentée par une forme géométrique elliptique entourée par les six domaines D1 à D6 énumérés ci-dessus.

Une fois intégrée, elle comporte des valeurs ajoutées appartenant à tout ou partie des six domaines, étant entendu qu'il n'est pas obligatoire de l'intégrer dans l'ensemble de ceux-ci.

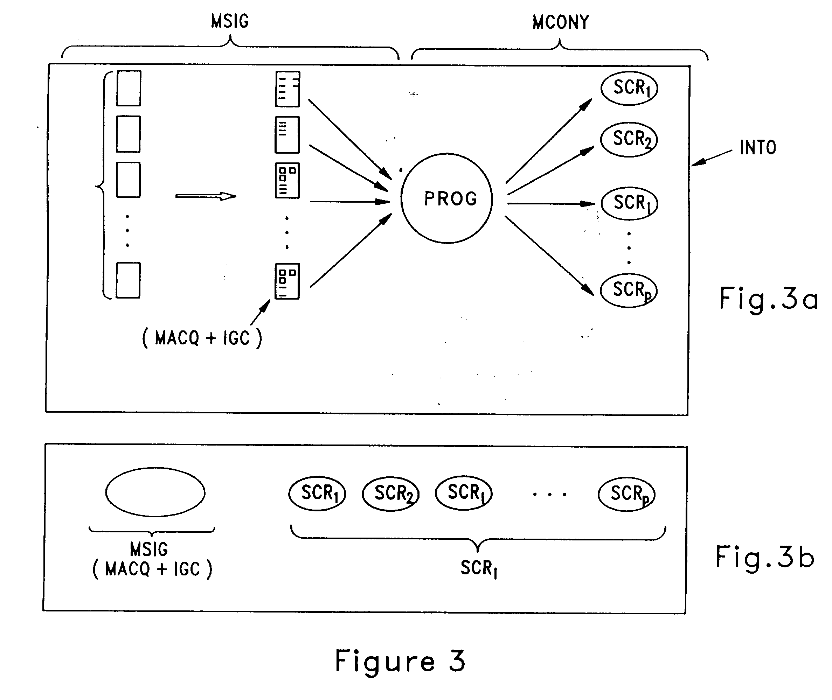

On considère la figure 3a.

L'outil d'intégration INTO comprend :
des moyens MSIG de saisie des informations d'intégration de APC lui permettant d'être prise en compte par tout ou partie des services SERV,
des moyens MCONV de conversion des informations d'intégration en un ensemble de commandes d'intégration SCRi de l'application dans les services SERV.

Les moyens MSIG comprennent :
des moyens MACQ d'acquisition des informations caractéristiques de l'application à intégrer,
une interface graphique IGC de collecte de ces informations et de transmission de celles-ci aux moyens de conversion.

Les moyens de conversion MCONV comprennent :
un logiciel PROG qui produit, à partir des informations caractéristiques provenant de l'interface graphique, des scripts SCR1, SCR2, SCR3, SCRi, SCRp propres à chaque service, qui permettent l'intégration automatique de APC dans les services SERV.

Pour mieux comprendre comment est constitué l'outil d'intégration INTO et comment il fonctionne, il est utile d'effectuer les rappels indiqués dans le paragraphe qui suit.

Pour configurer une application de services appartenant à l'ensemble SERV avec un langage de commandes, il faut que cette application soit capable de comprendre ce langage. Ceci est vrai même dans le cas où la plupart des applications nouvelles ne possèdent qu'une seule interface publique qui est graphique. Ces applications possèdent en général, soit des fichiers (non publics) qui se configurent à travers l'interface graphique, soit un langage de commandes internes connues seulement du développeur et qui se trouve en aval de l'interface graphique.

En revanche, l'outil selon l'invention INTO exige de la part des applications de services que leurs fichiers de configuration et leurs langages de commandes soient publics. La description de ces fichiers et/ou des langages de commandes est regroupée dans un guide PG (abréviation de Programming Guide), à destination des intégrateurs d'applications, dans le but de garantir la stabilité du fontionnement de l'application un fois celle-ci intégrée.

Compte tenu de ce qui est rappelé dans les deux paragraphes ci-dessus, les moyens MACQ d'acquisition des informations sont constitués par un ensemble de formulaires dont chacun correspond à un service déterminé et est fourni à l'éditeur de logiciels ou à l'opérateur humain désireux d'intégrer l'application APC.

Ces formulaires peuvent être par exemple placés sur le réseau INTERNET ou enregistrés sur un milieu d'enregistrement informatique, disque magnétique, disquette, bande magnétique, CD-ROM, etc... Chaque formulaire comporte des questions à remplir par l'éditeur concernant les caractéristiques de APC. Une fois le formulaire rempli, il est introduit au moyen de l'interface graphique IGC dans le logiciel PROG qui génère ensuite un "script" SCRi.

L'exécution de ce script SCRi permet d'intégrer cette application APC dans le service de SERV qui est associé au formulaire rempli. Elle ne peut avoir lieu qu'après l'installation de APC par le client dans la plate-forme PL.

II convient de noter que les formulaires peuvent être fournis par le constructeur à ses clients sur un serveur dit HTTP (HYPER TEXT TRANSFER PROTOCOL) appartenant au réseau INTERNET, au moyen de formulaires spécifiques dits "FORM" du langage normalisé HTML (HYPER TEXT MARK UP LANGUAGE) utilisé largement sur ce même réseau, le programme PROG qui génère les scripts pouvant être un programme normalisé CGI (COMMON GATEWAY INTERFACE).

Par suite, pour chaque application APC à intégrer dans PL, le logiciel PROG génère un ensemble de scripts SCRi (un script par service). Ces scripts sont exécutés à la fin de la procédure d'installation propre à PL et permettent à l'application APC installée d'être reconnue par les services SERV (le tableau de bord, l'archivage, l'administration des événements, la sécurité, etc.)
Ainsi, l'invention permet au client de réduire le temps nécessaire à l'intégration de APC de plusieurs jours à quelques minutes. Les temps d'intégration exacts dépendent bien sûr du niveau d'intégration c'est à dire du nombre et de la complexité des services dans lesquelles on veut l'intégrer.
Il convient de préciser qu'il n'est pas toujours possible pour le logiciel PROG de générer un script SCRi d'intégration pour chaque application de services. Dans ce cas, il est nécessaire de fournir une documentation aux éditeurs leur permettant de développer les scripts par eux-mêmes.

### II) DESCRIPTION D'UN EXEMPLE DE REALISATION PARTICULIER :

Pour mieux comprendre l'invention, il convient de l'illustrer de manière plus précise en choisissant comme application APC une application basée sur le moniteur transactionnel standard connu sous le nom de «TUXEDO» et comme service «TROUBLESHOOTING» qui est un service de PL qui permet aux administrateurs des applications "TUXEDO" de les surveiller en temps réel, via une interface graphique et un tableau de bord. "TUXEDO TROUBLESHOOTING" que l'on a coutume de désigner sous son appellation abrégée de TTH permet de superviser d'un point central plusieurs applications TUXEDO quelles que soient leurs implantations physiques sur le réseau. Il permet de voir en un simple regard sur le tableau de bord associé à l'interface graphique le fonctionnement de plusieurs applications TUXEDO, en affichant l'état des ressources de chaque application (en marche ou en arrêt). Ce service détecte aussi les événements sérieux, analyse le contexte de ces événements et propose des actions correctives.

On suppose que dans cet exemple de réalisation particulier, l'application APC à intégrer dans TTH reçoit le nom de baptême de «APPLI3»et que son intégration doit avoir pour résultat de la faire figurer dans le tableau de bord de celle-ci de manière automatique après son installation dans PL.

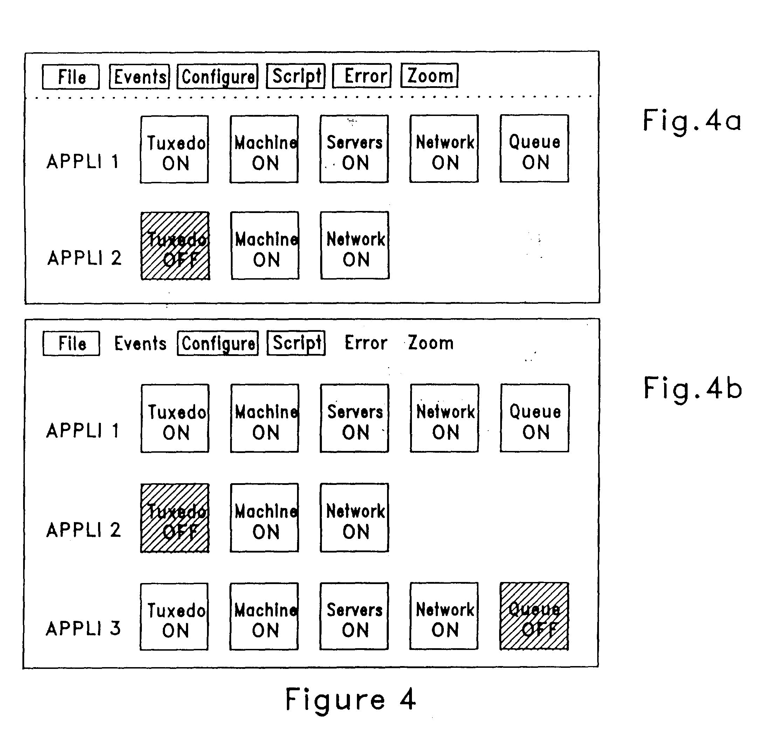

La figure 4 illustre le tableau de bord de TTH avant et après l'intégration de «APPLI3», la figure 4a montrant l'état de ce tableau de bord avant l'intégration et la figure 4b son état après l'intégration.

A la figure 4a, on voit que, avant intégration, TTH comporte deux applications dénommées «APPLI1» et «APPLI2», le tableau de bord affichant l'état de leurs ressources (en marche ou en arrêt : ON ou OFF) à l'intérieur des carrés au nombre de 5 pour la première et de 3 pour la seconde

Ainsi, on peut voir que, pour la première, toutes les ressources, appelées Tuxedo, Machine, Servers (Serveurs), etc... sont en fonctionnement (ON) alors que pour la seconde, les ressources Machine et Network (Réseau) sont en fonctionnement (ON) tandis que la ressource Tuxedo est à l'arrêt (OFF).

De la même façon, à la figure 4b, on peut voir que, après intégration, TTH comporte désormais «APPLI3» en plus des deux précédentes «APPLI1» et «APPLI2» et qu'elle affiche l'état de 5 ressources, à savoir, Tuxedo, Machine, Servers (Serveurs), Network (Réseau), et Queue (File d'Attente), les quatre premières étant en fonctionnement alors que la dernière est à l'arrêt.

L'annexe 1 montre le mode de réalisation complet des moyens d'acquisition MACQ (formulaire) spécifiques de TTH mis à la disposition de l'éditeur de «TUXEDO» afin d'être complétés de manière à commencer les opérations INTOPE d'intégration de «APPLI3»

Ce formulaire comporte 10 lignes L1 à L10 indiquant chacune la nature de l'information à donner (colonne de gauche), le nom codifié de celle-ci (colonne centrale) qui sera fourni au logiciel PROG et des commentaires concernant chacune de ces informations (en colonne de droite).

A partir des données du formulaire qui lui sont fournies par l'intermédiaire de l'interface graphique IGC de l'outil INTO, le logiciel PROG génère le script montré en annexe 2.

Ce script comporte également 10 lignes L1 à L10 correspondant strictement aux 10 lignes de l'annexe1.

Dans le cas d'une application TUXEDO, le script SCRi généré à la suite du remplissage du formulaire va demander le nom de connexion sur la plate-forme PL de l'administrateur de l'application APPLI3 ainsi que celui de sa machine maître dans le cadre de TUXEDO (dans le cadre de ce standard, chaque application possède une machine maître). SCRi créé ensuite un fichier appelé APPLI3. (voir annexe 2) qu'il va alors placer dans un répertoire particulier appelé «/var/madison/tuxedo/tga» et connu du service TTH. TTH va alors automatiquement se servir du fichier APPLI3. tux pour prendre en compte la nouvelle application APPLI3.

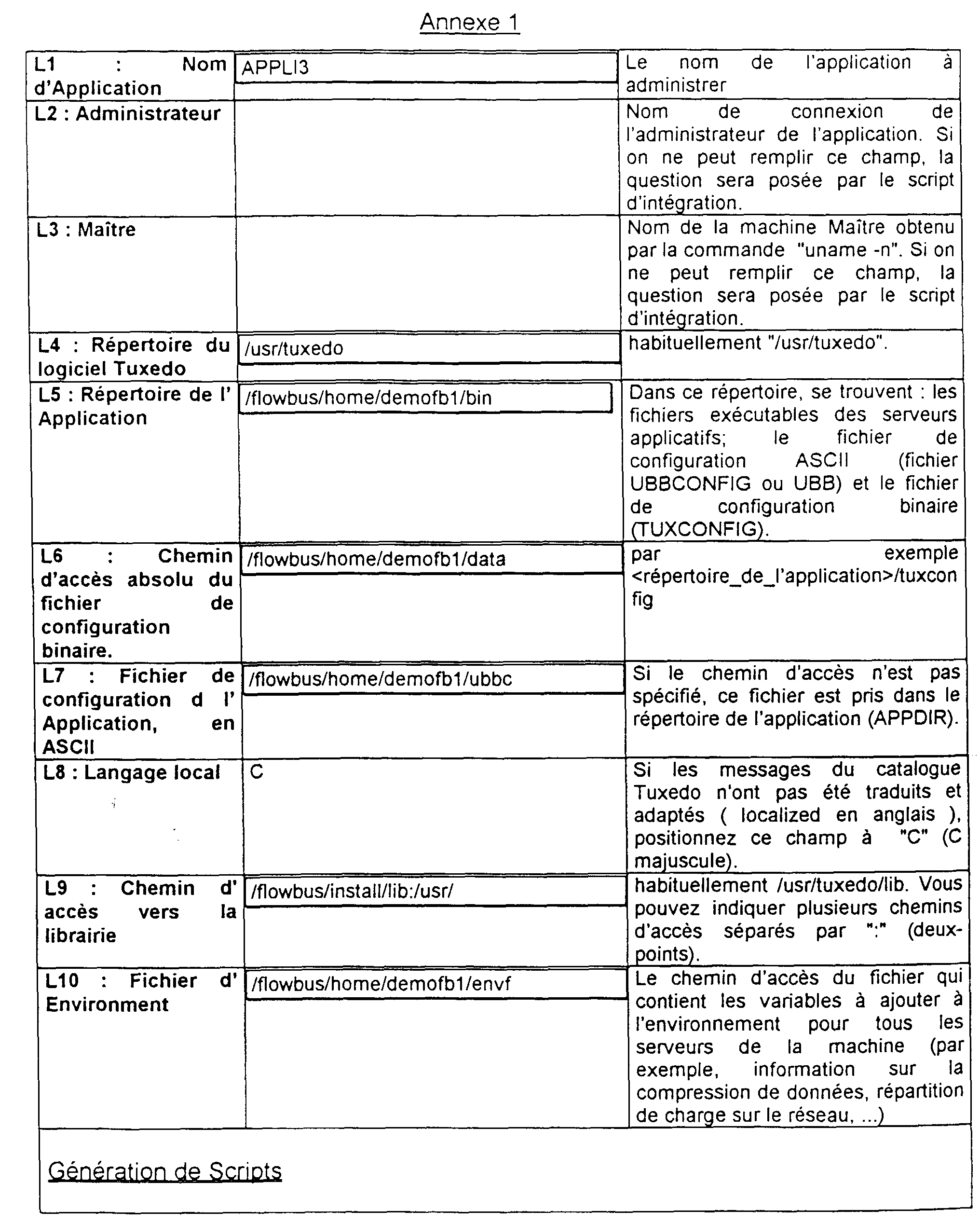

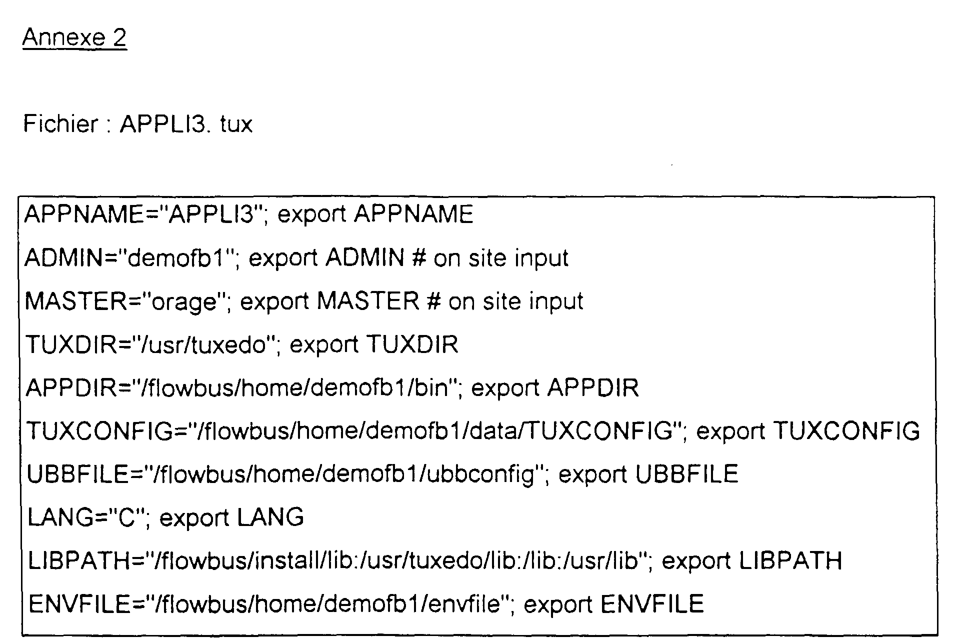

## Revendications

1. Outil (INTO) d'intégration d'applications (APC) pour plate-forme (PL) informatique constituée d'un réseau de machines sur lesquelles tournent une pluralité de services (SERV) spécifiques de la plate-forme, caractérisé en ce qu'il comprend :
- des moyens de saisie (MSIG) des informations d'intégration de la nouvelle application pour lui permettre d'être prise en compte par tout ou partie des services,
- des moyens de conversion (MCONV) des informations d'intégration en un ensemble (SCRi) de commandes d'intégration de l'application (APC) dans les services(SERV) .

2. Outil (INTO) d'intégration d'applications (APC) pour plate-forme (PL) informatique selon la revendication 1 caractérisé en ce que les moyens de saisie (MSIG) sont constitués par l'association de moyens d'acquisition (MACQ) des informations caractéristiques de l'application à intégrer et d'une interface graphique de collecte (IGC) de ces informations et de transmission de celles-ci aux moyens de conversion.

3. Outil (INTO) d'intégration d'applications pour plate-forme informatique selon la revendication 1 caractérisé en ce que les moyens de conversion (MCONV) sont constitués par un logiciel (PROG) qui produit, à partir des dites informations caractéristiques, des scripts (SCRi) propres à chaque service et qui permettent l'intégration automatique de l'application (APC) dans les services(SERV).

4. Outil (INTO) d'intégration d'applications pour plate-forme informatique (PL) selon la revendication 2 caractérisé en ce que les moyens d'acquisition (MACQ) sont constitués par un ensemble de formulaires dont chacun correspond à un service déterminé et est fourni à l'opérateur logiciel ou humain chargé d'intégrer la dite application (APC).

5. Outil (INTO) d'intégration d'applications pour plate-forme informatique (PL) selon la revendication 4 caractérisé en ce que, cette dernière étant connectée à un réseau de type INTERNET, les formulaires sont des formulaires spécifiques dits "FORM" du langage normalisé HTML (HYPER TEXT MARK UP LANGUAGE) utilisé largement sur ce même réseau, le logiciel (PROG) qui génère les scripts étant un programme normalisé de type CGI (COMMON GATEWAY INTERFACE).
